Europäisches Patentamt

(19) European Patent Office

Office européen des brevets

(11) Publication number: **0 095 536**
**B1**

# EUROPEAN PATENT SPECIFICATION

(12)

(45) Date of publication of patent specification: **18.03.87**

(21) Application number: **82302816.2**

(22) Date of filing: **01.06.82**

(51) Int. Cl.⁴: **G 09 G 1/00**

(54) The representation of character images in a compact form for computer storage.

(43) Date of publication of application:
**07.12.83 Bulletin 83/49**

(45) Publication of the grant of the patent:
**18.03.87 Bulletin 87/12**

(84) Designated Contracting States:
**AT BE CH DE FR GB IT LI LU NL SE**

(56) References cited:
**EP-A-0 009 662**
**US-A-4 251 871**

**IBM TECHNICAL DISCLOSURE BULLETIN, vol. 21, no. 11, April 1979, pages 4576-4578, New York; USA S. ODA: "Kanji character generation"**

**IEEE TRANSACTIONS ON SYSTEMS, MAN AND CYBERNETICS, vol. SMC-3, no. 3, May 1973, pages 257-265 SHI-KUO CHANG: "An interactive system for Chinese character generation and retrieval"**

(73) Proprietor: **Zhang, Song Zhi**
**Room 1202-1211 Wu Sang House 655 Nathan Road**
**Kowloon (HK)**

(73) Proprietor: **Wang, Xuan**
**Room 1202-1211 Wu Sang House 655 Nathan Road**
**Kowloon (HK)**

(73) Proprietor: **Wong, Kam Fu**
**Room 1202-1211 Wu Sang House 655 Nathan Road**
**Kowloon (HK)**

(72) Inventor: **Wang, Xuan**
**Room 1202-1211 Wu Sang House 655 Nathan Road**
**Kowloon Hong Kong (HK)**

(74) Representative: **Allen, Oliver John Richard et al**
**Lloyd Wise, Tregear & Co. Norman House**
**105-109 Strand**
**London, WC2R 0AE (GB)**

Courier Press, Leamington Spa, England.

## Description

This invention relates to the compressed representation of high resolution characters, especially Chinese characters and other ideographic characters, in computer storage and to the transforming of this compressed representation into a high resolution dot matrix in a manner especially suitable for raster output.

This invention is particularly useful in connection with a fast, high resolution, character generator and typesetting controller in a computerized laser system for typesetting books and newspapers in Chinese as well as in other languages, but it also has application to a CRT typesetter.

Up to now, it has been very difficult to represent efficiently high resolution Chinese character images in computer storage. In book and newspaper publications, high printing quality is of prime importance and as a result resolution should be over 25 lines/mm. Moreover, numerous typefaces and sizes are needed in typesetting. The most advanced fourth generation laser typesetter has a series of advantages including the prospect of direct plate-making, but there are some problems caused by the raster output nature of laser system. Unlike a CRT, a laser output device cannot change its dot size instantly during scanning and therefore different sizes of the same character must be represented by different dot matrices. If the resolution is 29.3 lines/mm, various sizes of characters needed in typesetting Chinese newspapers and their corresponding dot matrices are as follows:

| Character size | | Dot matrix |
|---|---|---|
| In point | In mm² | |
| 56 | 19.66 | 576×576 |
| 48 | 16.86 | 494×494 |
| 42 | 14.74 | 432×432 |
| 36 | 12.63 | 370×370 |
| 31.5 | 11.06 | 324×324 |
| 28 | 9.83 | 288×288 |
| 21 | 7.37 | 216×216 |
| 18 | 6.28 | 184×184 |
| 15.75 | 5.53 | 162×162 |
| 14 | 4.91 | 144×144 |
| 12 | 4.23 | 124×124 |
| 10.5 | 3.68 | 108×108 |
| 9 | 3.14 | 92× 92 |
| 7.875 | 2.76 | 82× 82 |
| 7 | 2.46 | 72× 72 |
| 6 | 2.12 | 62× 62 |

Over ten typefaces are frequently used in Chinese publications. They are Song, imitation Song, display Song (for headline), boldface, regular script, long Song, short Song, long boldface, short boldface, long imitation Song etc. Each typeface must contain over 8,000 different Chinese characters. As a result the total storage requirement for all the Chinese characters in different typefaces and sizes used in Chinese publications would be well over $2 \times 10^9$ bytes. Therefore efficient representation of high resolution Chinese characters becomes a crucial problem in developing a Chinese typesetting system.

Prior to the present invention, a run length coding technique has been widely used to represent high resolution character images by a lot of typesetters including the CRT typesetter known as Digisit from Hell Corporation in West Germany, the IBM full page typesetter used in the Japanese newspaper "The Economic News" and the Laser Comp of British Monotype Corporation. Instead of storing the whole dot

2

matrix of a character, it only records the beginning and the length of separate black sections in each horizontal (or vertical) line of the character. The original dot matrix of the character can be faithfully reproduced and the storage required can be reduced by one-half.

The main drawbacks of this approach are, however, poor data compression ratio and the difficulty of generating different sizes of a character from a single representation. Using this method, different sizes of the same font would occupy separate storage areas of the disc and a 80 M bytes disc can only store 60,000 Chinese characters in different typefaces and sizes. The low access speed of removable discs limits the capability of supplying character images to some 25 characters/second and becomes the bottleneck of the typesetting system.

Another approach developed in Japan and Taiwan regards Chinese characters as composed of several hundred radicals. Only radicals are stored in the computer memory and a Chinese character is generated by addressing its component radicals and putting them in appropriate positions. The overall data compression ratio is good, but distortion and degradation in quality caused by above composition method are entirely unacceptable to the Chinese printing industry.

IBM Technical Disclosure Bulletin Vol. 21 No. 11 April 1979 pages 4576—4578 describes a method of representing and generating low or medium quality Chinese characters to be used in office automation, word processors and the like; high quality Chinese characters in the printing industry cannot be generated by this method however.

As described in this Bulletin, the Song typeface strokes are classified into ten basic patterns determined solely by the direction of vectors. According to that method, the character information consists of control data and vector data. The control data mainly indicates the stroke density besides the total number of vectors whilst the vector data indicates the start and end point of vectors.

It is therefore an object of the invention to provide a data compression technique for high resolution Chinese characters which can dramatically reduce storage requirement without any degradation in output quality.

According to the invention there is provided a method of representing a character image of a resolution of from 17 to at least 50 lines per millimeter in a compact form for computer storage and then transforming that resulting representation into a dot matrix ready for display, characterised in that the strokes of a character are classified into regular strokes including horizontal, vertical and turn strokes mainly composed of straight segments, and irregular strokes in the form of curves, and different compressed representations are used respectively:

for regular strokes, a 24 to 48 bits compressed representation is used to describe the beginning X, Y coordinates, length, width, starting feature, ending feature turning and slant, and

for irregular strokes, e.g. of Chinese characters and characters of other languages, a series of vectors (approximately straight segments) are used to approximate to the stroke outline with each vector represented by directed increments $(\Delta X, \Delta Y)$ of X, Y coordinates and a number of different cases of increments are discriminated to make the representation more compact, and in that:

a) the resulting compressed representation of regular strokes is reduced to a sequence of vectors with each vector expressed as an 8-bit signed X increment $\Delta X$ and an 8-bit signed Y increment $\Delta Y$, and optionally scaling each vector to generate a character of the required size,

b) each sequence of vectors in the unified form is transformed into a so-called marked dot matrix in which each dot position occupies two bits marking one of the four situations of that dot:
1) beginning of black section (B-mark),
2) end of black section (E-mark),
3) isolated black dot (I-mark),
4) vacancy (V-mark), and

c) the marked dot matrix is transferred into a final dot matrix and loaded into an appropriate location in an output buffer to form part of a page layout.

The strokes of Chinese characters in printing can be classified into two kinds, the regular stroke consisting of horizontal, vertical and turn strokes and the irregular strokes. The former account for over half of the strokes occurring in Chinese characters according to statistics. The regular strokes are composed of straight segments and starting, ending and turning features which are regular in shape and they can be precisely described by only 3 to 6 bytes of information.

Thus, according to the present invention, regular strokes are represented by starting, ending or turning features which are the major variable parts of a regular stroke and the number of possible shapes of these sorts of items are limited. They can therefore be stored in the memory beforehand and only a relatively small number of them are necessary so that for example the ordinal numbers 0 to 15 can be used to represent up to 16 different starting features for each stroke, e.g. a vertical stroke or whatever. Thereafter only a few bits of information are necessary to represent length, width and angle of various slants.

According to the present invention for irregular strokes, one uses vector information but entirely different vector information from the vector information used in the above noted IBM Bulletin. In the present invention, the vector information which is used depicts the contour or outline and this contour or outline is made up of a series of approximately straight segments which, when joined together, give the approximate curved contour of the overall stroke. No concept such as this contained in the above noted

3

**0 095 536**

IBM Bulletin, in the preparation of high quality printing for Chinese characters, the ten basic patterns chosen and illustrated are far from enough to enable high quality printing to be achieved.

According to one feature of the invention a basic size is selected from which all other sizes can be reproduced. By way of example, 10.5 point (or 3.68 mm²) can be selected as a basic size in this invention. Characters of basic size are considered to be drawn on a grid with 96×96 units.

To represent Song typeface, imitation Song typeface, display Song typeface and boldface Chinese characters, the vertical strokes can be represented by 32 to 40 bits information comprising:

(a) the beginning X, Y coordinates,

(b) length,

(c) 2 to 4 bits width,

(d) 2 to 5 bits ordinal number of a starting feature, and

(e) less than 4 bits ordinal number of an ending feature.

The horizontal strokes of Song typeface and display Song typeface Chinese characters can be represented by 24 to 32 bits information comprising:

(a) the beginning X, Y coordinates,

(b) length,

(c) 2 to 4 bits oridinal number of ending feature;

(d) optional 1 or 2 bits designating width variation of the horizontal stroke, and

(e) an optional bit indicating whether a standard starting feature is present.

The horizontal strokes of boldface Chinese characters can be represented by 24 to 32 bits of information comprising:

(a) the beginning X, Y coordinates,

(b) length,

(c) 3 or 4 bits designating width, and

(d) optional 3 to 6 bits describing the slant edge.

The horizontal strokes of imitation Song typeface Chinese characters in which the horizontal strokes are equally divided into left half part and right half part can be represented by 32 to 40 bits of information comprising:

(a) the beginning X, Y coordinates,

(b) length,

(c) 1 or 2 bits designating width at the central point of the horizontal stroke,

(d) 1 to 3 bits designating the variation of the left edge (i.e. the starting feature),

(e) 1 to 3 bits designating the slant of the lower edge of the left half part,

(f) 1 to 3 bits designating the slant of the lower edge of the right half part, and

(g) 2 to 4 bits ordinal number of the ending feature.

The turn strokes of Song typeface and display Song typeface Chinese characters can be represented by 40 to 48 bits of information comprising:

(a) the beginning X, Y coordinates,

(b) length of vertical part of the turn stroke,

(c) length of horizontal part of the turn stroke,

(d) 2 to 4 bits width of vertical part,

(e) 3 to 5 bits ordinal number of turning feature,

(f) 2 or 3 bits ordinal number of ending feature,

(g) optional 1 or 2 bits designating width variation of the horizontal part,

(h) optional 1 or 2 bits indicating whether the right edge of the vertical part is slant and the degree of slant, and

(i) an optional bit indicating whether a standard starting feature is present.

The turn strokes of boldface Chinese characters can be represented by 40 bits of information comprising:

(a) the beginning X, Y coordinates,

(b) length of vertical part,

(c) length of horizontal part,

(d) width of vertical part, and

(e) width of horizontal part.

The turn strokes of imitation Song typeface Chinese characters can be represented by 40 to 48 bits of information comprising:

(a) the beginning X, Y coordinates,

(b) length of vertical part,

(c) length of horizontal part,

(d) width of vertical part,

(e) width of horizontal part,

(f) 3 to 5 bits for the ordinal number of the turning feature,

(g) 2 to 4 bits indicating whether the vertical part is slanted and the degree of slanting,

(h) 1 to 3 bits designating the slant of the horizontal part, and

(i) 2 to 4 bits ordinal number of the ending feature.

4

**0 095 536**

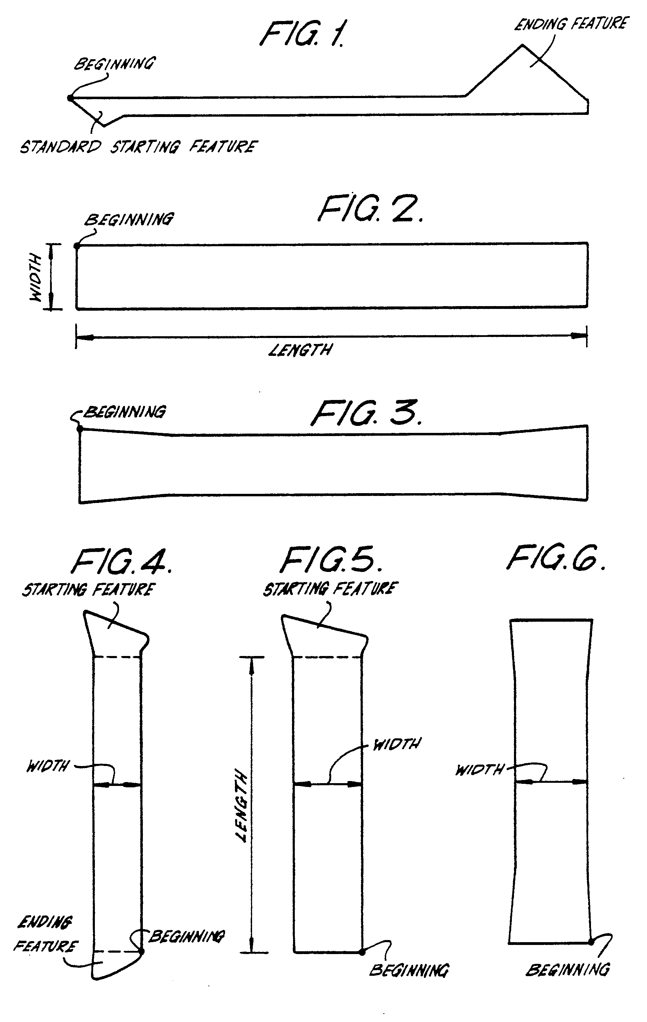

The horizontal stroke of Song typeface and display Song typeface Chinese characters is described in the accompanying Figure 1. In most cases, it can be represented by 24 bits as follows:

stroke identifier (1-bit): "0" means horizontal stroke, "1" means other regular strokes,
beginning X coordinate (6-bit),
beginning Y coordinate (7-bit),
length (7-bit)
ending feature (3-bit).

According to statistics, there are only 5 or 6 different shapes of ending feature because of the regularity of the horizontal stroke. These different shapes of ending feature can be stored in main memory beforehand and represented by a 3-bit ordinal number in the 24-bit compressed representation. There is only one standard starting feature for all horizontal strokes of Song and display Song typefaces and it can be generated automatically by hardware. The normal width of the horizontal stroke is 2 units on a 96×96 grid.

When the beginning X coordinate exceeds 64, or the horizontal stroke does not have a starting feature, or it has an abnormal width, then three bits normally designating ending feature in the above 24-bit representation are set to all ones and an additional 8 bits are needed to represent these seldom situations with:

one bit for the most significant bit of 7-bit beginning X coordinate,
one bit indicating whether a starting feature exists,
2 bits designating width variation, and
3 bits designating ending feature.

The horizontal stroke with a flat edge in boldface Chinese characters is described in Figure 2. It can be represented by 24 bits as follows:

stroke identifier (1-bit),
beginning X coordinate (6-bit),
beginning Y coordinate (7-bit),
length (7-bit),
width (3-bit).

There are 7 different values of width, from 5 to 11 units on a 96×96 grid.

For the horizontal stroke with a beginning X coordinate which is greater than 64, or for the horizontal stroke with a slant edge in boldface Chinese characters depicted in Figure 3, an additional 8 bits are required to denote the most significant bit of 7-bit beginning X coordinate and describe the length and width variation of the slant edge.

The vertical stroke of Song typeface, display Song typeface and imitation Song typeface is described in Figure 4. It can be represented by 32 bits as follows:

stroke identifier (2-bit): "10" means turn stroke,
"11" means vertical strokes,
beginning X coordinate (7-bit),
beginning Y coordinate (7-bit),
length (7-bit),
width (2- or 3-bit): 2-bit for Song and imitation Song, 3-bit for display Song,
starting feature (4-bit),
ending feature (2- or 3-bit): 2-bit for display Song, 3-bit for Song and imitation Song.

The shapes of various starting and ending features are stored in memory and the corresponding ordinal number is included in the 32-bit compressed representation. When a regular stroke has a curved extension, the compressed representation of the curved extension, which is in the form of an irregular stroke without the information about X, Y coordinates of the starting point, should preferably follow immediately the compressed representation of that regular stroke to reduce the information required.

The vertical stroke with a flat edge in boldface Chinese characters, which is depicted in Figure 5, can be represented by 32 bits similar to that of display Song typeface. For the vertical stroke with a slant edge described in Figure 6, an additional 8 bits are required.

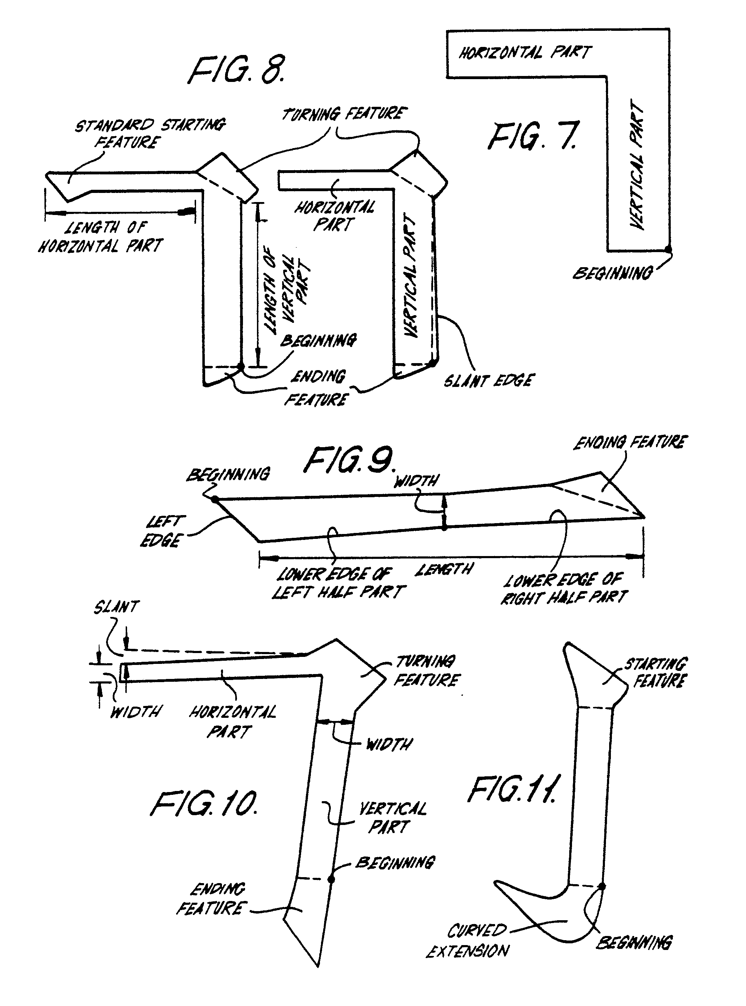

The turn stroke of boldface is rather simple as depicted in Figure 7 and can be represented by 40 bits.

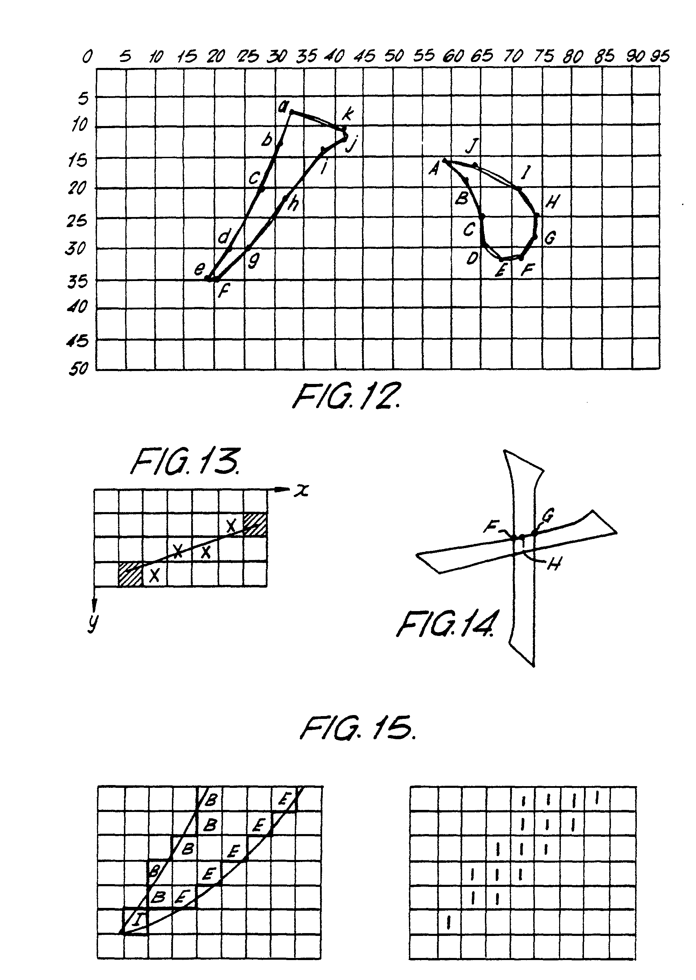

The turn stroke of Song typeface and display Song typeface as depicted in Figure 8 and Figure 9 can be represented by 40 bits:

stroke identifier (2-bit),
beginning X coordinate (7-bit),
beginning Y coordinate (7-bit),
length of vertical part (7-bit),
length of horizontal part (7-bit),
width of vertical part (2- or 3-bit): 2-bits for Song typeface,
width of horizontal part (1-bit): only for Song typeface,
turning feature (3-bit): up to 8 different shapes for each width value,
ending feature (2-bit),

5

slant indicator (1-bit): indicating whether the right edge of upright part is slant,

starting feature indicator (1-bit): indicating whether a standard starting feature exists.

The horizontal stroke of imitation Song typeface as described in Figure 9 can be regarded as equally divided into left half and right half part with possibly a different degree of slant and is represented by 32 bits:

stroke identifier (1-bit),

beginning X coordinate (6-bit),

beginning Y coordinate (7-bit),

length (7-bit),

width of the stroke at the central point (1-bit),

ending feature (4-bit),

variation of the left edge (2-bit),

slant of the lower edge of the left half part (2-bit),

slant of the lower edge of the right half part (2-bit).

Here the left edge is a straight segment with identical increments in X and Y directions. According to statistics, there are four different increments: 2 to 5 units (on a 96×96 grid). The slant of the lower edge can be measured by the difference between Y coordinate of the start point of the edge and that of the end point of the edge.

The turn stroke of imitation Song typeface is depicted in Figure 10. Corresponding bits are required in the 40-bit or 48-bit representation to describe the slant of the vertical part as well as the horizontal part.

Vertical stroke and turn stroke may have a curved extension in the lower part as shown in Figure 11. When the 2 or 3 bits normally designating the ending feature are all ones, it means that the vertical stroke or turn stroke has a curved extension represented in the form of irregular stroke, which will be illustrated later.

The advantages of using the above compressed representations for regular strokes are the precise description of the outline whilst still using extremely compact information and precise quality control when different sizes of character are generated from a single internal representation.

Turning now to the compressed representation of irregular stroke in Chinese characters and characters of other languages, irregular stroke can be represented by a series of variable length and direction vectors, i.e. vectors whose sign (positive or negative) gives direction, which approximate to the curved contour, and if the error caused by the approximation is controlled to less than half a unit on a grid with 96×96 units, we have found that output quality will not be significantly impaired.

Two examples of irregular strokes are shown in Figure 12. On the right of Figure 12, a "point" is represented by a sequence of vectors AB, BC, CD, DE, EF, FG, GH, HI, IJ, JA with point A as start point of the stroke.

The start point of a stroke is expressed as X, Y coordinates and each vector is expressed as signed, i.e. plus or minus, increments of X, Y coordinates ($\Delta$X, $\Delta$Y). Using the X, Y coordinates in Figure 12, the shape of the "point" shown on the right of Figure 12 may be represented as follows:

$$15, 59; 3, 3; 2, 5; 1, 5; 3, 2; 4, -1; 3, -3; 0, -3; -3, -3; -7, -4.$$

Here the last vector JA is not required in the compressed representation because it can be generated automatically by the character generator. As can be seen, all X and Y increments in the above representation are less than 8, but the direction of vectors varies frequently. Statistics show that this situation often occurs in many irregular strokes of Chinese characters such as a "point" and so its representation should be made more compact.

Preferably the invention uses a control byte to discriminate cases of vectors length, e.g. three cases can be distinguished—less than 8, less than 16 and not less than 16.

1. If the first two bits of the control byte are 00, it means that the subsequent N vectors lie in the same quadrant and the increments of each vector are less than 16, where N is designated by the last four bits of the control byte and the quadrant is designated by the middle two bits. Each of the subsequent N bytes represents a vector with four bits defining the absolute value of $\Delta$X (0—15) and four bits for that of $\Delta$Y (0—15).

2. If the first two bits of the control byte are 01, it means that the increments of each of the subsequent N vectors are less than 8, where N is designated by the last five or six bits of the control byte. Each of the subsequent N bytes represents a vector with two bits defining the quadrant in which the vector lies, three bits defining the absolute value of $\Delta$X (0—7), and three bits for the absolute value of $\Delta$Y (0—7).

3. If the first two bits of the control byte are 10, it means that either $\Delta$X or $\Delta$Y of the present vector may be greater that or equal to 16. The remaining six bits of the control byte combined with the subsequent byte represent a vector whose increment may be greater than or equal to 16 but less than 64.

4. If the first two bits of the control byte are 11, it means the start point of an irregular stroke. The remaining six bits of control byte combined with the subsequent byte define the X and Y coordinates of the start point.

For example, the irregular stroke "point" on the right of Figure 12 consisting of 10 vectors can be represented by the following 12 bytes:

6

X, Y coordinates of start point A (2 bytes),
control byte beginning with 01 which defines the number 9,
9 bytes represent 9 vectors (AB, BC, CD, DE, EF, FG, GH, HI, IH).

As another example, the irregular stroke on the left of Figure 12 consisting of 11 vectors can be represented by the following 14 bytes:

X, Y coordinates of start point a (2 bytes), control byte beginning with 00 which defines the number 4 and the third quadrant,

4 bytes represent 4 vectors (ab, bc, cd, de), control byte beginning with 00 which defines the number 6 and the first quadrant,

6 bytes represent 6 vectors (ef, fg, gh, hi, ij, jk).

Using the above compressed representations for regular and irregular strokes, the storage required by a 10.5 point Chinese character is reduced to 100 bytes in average according to statistics based on 7,000 different Song typeface Chinese characters, yet the output quality has not been degraded in the least.

The compressed representation achieved has then to be transformed into a corresponding dot matrix and so according to another aspect of the invention the procedure comprises:

(a) reducing a representation of regular strokes, e.g. the very compact representation achieved as described above, to a sequence of vectors which approximate to the contour of that regular stroke with each vector expressed as an 8-bit signed $\Delta X$ and 8-bit signed $\Delta Y$, and reducing the three different representations of vector series in an irregular stroke to a unified form in which each vector is expressed as an 8-bit signed $\Delta X$ and 8-bit signed $\Delta Y$, during this step the vectors can be scaled to give characters of the required size, as will be described below,

(b) transforming each sequence of vectors in the unified form into marked dot matrix in which each dot position occupies two bits marking one of the four situations of that dot:

    (1)   beginning of black section (B-mark),
    (2)   end of black section (E-mark),
    (3)   isolated black dot (I-mark),
    (4)   vacancy (V-mark), and

(c) transforming the marked dot matrix into a final dot matrix to be outputted.

This procedure can be performed for example, by a microprogram stored in a bipolar PROM (Programmable Read Only Memory).

The algorithm used to transform a vector into approximate digitized dots in procedure b above is described below.

For the vector when $\Delta X \geqslant \Delta Y$, X is varied (incremented or decremented by 1) in each step; whether Y is varied is determined through addition and comparison.

From the start point of the vector with initial Acc=0.

In each step, $Acc+\Delta Y \rightarrow Acc$, then Acc is compared with $\Delta X/_2$:

if $Acc \geqslant \Delta X/_2$, then Y is varied (incremented or decremented by 1) and $Acc-\Delta X \rightarrow Acc$, continue to next step,

if $Acc < \Delta X/_2$, then Y remains unchanged, continue to next step.

The above operation is performed until the number of steps being executed reaches the value of $\Delta X$.

An example is shown in Figure 13. X is decremented by 1 in each of the five steps and Y is incremented by 1 only in the second and fourth steps according to the result of comparison.

Precisely identical steps are applied to the vector when $\Delta X < \Delta Y$, X being substituted for Y and Y for X in the above steps.

This algorithm is an optimized one which generates nearest digitised dots to a vector.

Thereafter, according to a preferred feature of the invention 2-bit mark has to be written into the corresponding position of the marked dot matrix. This can be achieved as follows:

A character will be scanned by the laser from left to right horizontally.

Ignoring the node of two vectors, the 2-bit mark at each dot position of a vector is determined jointly by the quadrant in which the vector lies and by whether Y is varied in the respective steps as follows:

(a) for a vector occurring in first quadrant,
    if Y is varied in the present step in respect to the dot, then an E-mark is written into the corresponding dot position of the marked dot matrix,
    if Y is not varied in the present step, then V-mark is written,

(b) for a vector occurring in second quadrant,
    if Y is varied in the last step in respect to the dot, then an E-mark is written,
    if Y is not varied in the last step, then a V-mark is written,

(c) for a vector occurring in third quadrant,
    if Y is varied in the present step, then a B-mark is written,
    if Y is not varied in the present step, then a V-mark is written, and

(d) for a vector occurring in fourth quadrant,
    if Y is varied in the last step, then a B-mark is written,
    if Y is not varied in the last step, then a V-mark is written,

the term "present step" in respect to a dot meaning the step which begins with the dot and the term "last step" in respect to a dot meaning the step which ends at the dot.

7

**0 095 536**

Further the 2-bit mark to be written into the node of two vectors is determined by the quadrants in which the first and second vectors lie and the variation of Y in the last and present step in respect to the node as follows:

| Quadrant in which first vector lies | Quadrant in which second vector lies | Condition | 2-bit mark to be written |
|---|---|---|---|
| I | I | Y is varied in the present step | E-mark |
| | | Y is not varied in the present step | V-mark |
| II | II | Y is varied in the last step | E-mark |
| | | Y is not varied in the last step | V-mark |
| III | III | Y is varied in the present step | B-mark |
| | | Y is not varied in the present step | V-mark |
| IV | IV | Y is varied in the last step | B-mark |
| | | Y is not varied in the last step | V-mark |
| I | II | in any condition | E-mark |
| I | III | Y is varied in the present step | I-mark |
| | | Y is not varied in the present step | E-mark |
| I | IV | in any condition | V-mark |
| II | I | Y is varied in both the last and present steps | E-mark |
| | | others | V-mark |
| II | III | Y is varied in both the last and present steps | I-mark |
| | | Y is not varied in both the last and present steps | V-mark |
| | | Y is used in the present step but not varied in the last step | B-mark |
| | | Y is varied in the last step but not varied in the present step | E-mark |

8

| Quadrant in which first vector lies | Quadrant in which second vector lies | Condition | 2-bit mark to be written |
|---|---|---|---|
| II | IV | Y is varied in the last step | I-mark |
| | | Y is not varied in the last step | B-mark |
| III | I | Y is varied in the present step | I-mark |
| | | Y is not varied in the present step | B-mark |
| III | II | in any condition | V-mark |
| III | IV | in any condition | B-mark |
| IV | I | Y is varied in both the last and present steps | I-mark |
| | | Y is not varied in both the last and present steps | V-mark |
| | | Y is varied in the present step but not varied in the last step | E-mark |
| | | Y is varied in the last step but not varied in the present step | B-mark |
| IV | II | Y is varied in the last step | I-mark |
| | | Y is not varied in the last step | E-mark |
| IV | III | Y is varied in both the last and present steps | B-mark |
| | | others | V-mark |

The 2-bit mark may be written into the same position of the marked dot matrix more than once during the generation of a character image because intersection of strokes is allowed. Then the final 2-bit mark of the marked dot matrix is determined jointly by the old mark previously written and by the mark to be written as follows:

| Old mark | Mark to be written | Final mark |
|---|---|---|
| V | V | V |
| V | B | B |
| V | E | E |
| V | I | I |
| B | V | B |
| B | B | B |
| B | E | I |
| B | I | B |
| E | V | E |
| E | B | I |
| E | E | E |
| E | I | E |
| I | V | I |
| I | B | B |
| I | E | E |
| I | I | I |

For example, the imitation Song typeface Chinese character as shown in Figure 14 consists of a horizontal regular stroke and a vertical regular stroke. Initially, the marked dot matrix is cleared, that is, a V-mark is written into all positions. During the generation of the horizontal stroke, a B-mark has been written into the dot position F and G. When the vertical stroke is being generated, a E-mark is to be written into position G and a B-mark is to be written into dot position F. Therefore the final 2-bit mark at a position must be determined jointly by the old mark already written and by the new mark to be written. In Figure 14, the final 2-bit mark at dot position G should be an I-mark; the final 2-bit mark at dot position F should still be a B-mark, but an additional B-mark must be written into the right side of dot position G (i.e. dot position H), otherwise the number of B-mark in this line would be less than that of E-mark and an error would be caused.

Thus, according to a preferred embodiment a check is made as to whether the number of B-marks is equal to that of E-marks in each line of the marked dot matrix and a warning signal generated if any inequality occurs.

In other words, the final 2-bit mark at the node of two vectors can be generated by a 256×2 PROM or a 256×3 PROM wherein the address of the PROM consists of:

(a) old mark (2 bits),
(b) quadrant in which the first vector lies (2 bits),
(c) quadrant in which the second vector lies (2 bits),
(d) the bit indicating whether Y is varied in the present step (1 bit),
(e) the bit indicating whether Y is varied in the last step (1 bit),

and the contents of PROM consists of the corresponding 2-bit final mark and the bit indicating whether an additional B-mark (or E-mark) should be written into the right side (or left side) of the dot in the case of 256×3 PROM.

Dots of a vector other than the node can be regarded as a special case of the above where the two quadrants are the same.

The marked dot matrix must now be transformed into a final dot matrix to be outputted.

Each line is scanned from left to right. When a B-mark is encountered, all the dots on the right of it will be set to "1". I-mark is always transformed into "1", but it has no effect on other dots.

An example of a marked dot matrix and its corresponding final dot matrix is shown in Figure 15.

Sometimes a pair of B-mark and E-mark may be nested in another pair of B-mark and E-mark as shown

# 0 095 536

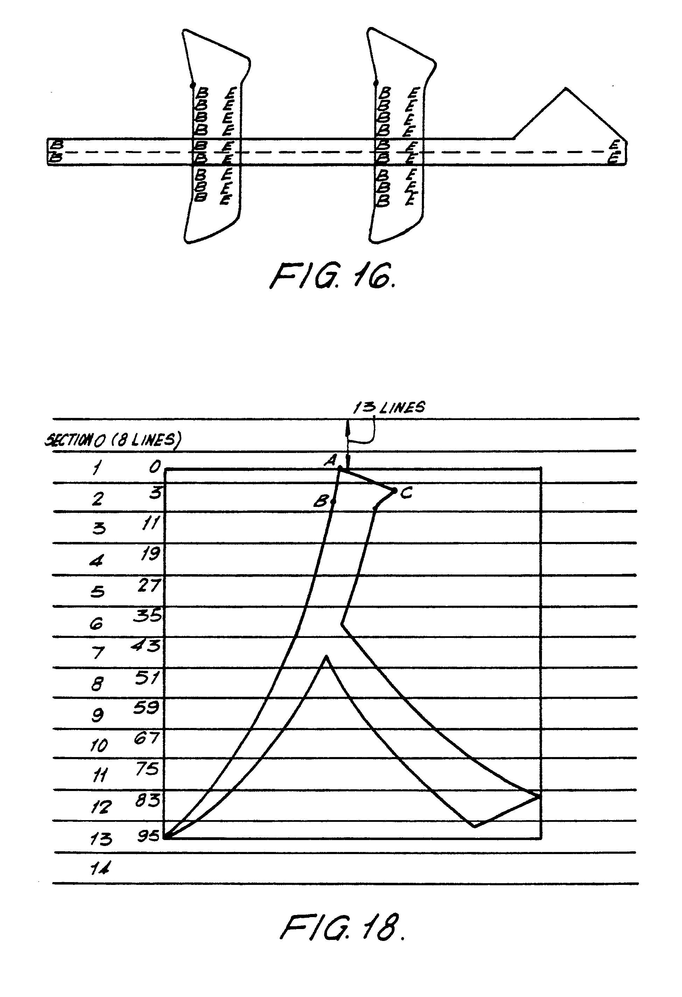

in Figure 16 because of intersection of strokes. A 2-bit depth counter is included in the device to record the depth of the B-mark: when a B-mark is encountered, the depth counter is incremented by 1; when an E-mark is encountered, the depth counter is decremented by 1. The contents of the depth counter determine whether a V-mark should be transformed into "1".

Two dots of the marked dot matrix can be transformed in a single cycle to increase speed. Two bits of the final dot matrix generated in a single cycle and the new state of the depth counter are the function of following 6 bits:

two corresponding dots of the marked dot matrix to be transformed (4 bits),
old state of depth counter (2 bits).

This can be implemented by a 64×4 PROM to increase speed and reduce cost. Examples of some values of the function are described in the following table:

| Two dots of marked dot matrix | | Old state of depth counter | Corresponding two bits of final dot matrix | | New state of depth counter |
|---|---|---|---|---|---|
| V | B | 0 | 0 | 1 | 1 |
| V | E | 1 | 1 | 1 | 0 |
| B | V | 0 | 1 | 1 | 1 |
| E | V | 1 | 1 | 0 | 0 |
| B | B | 0 | 1 | 1 | 2 |
| E | V | 2 | 1 | 1 | 1 |
| V | I | 0 | 0 | 1 | 0 |
| B | I | 0 | 1 | 1 | 1 |

The compressed representation of characters described above provides a single basic size of character. It is therefore required to generate different sizes of character from that basic size. This can be achieved according to another feature of the invention during step a of the transformation procedure noted above in the manner described below.

Because an irregular stroke is expressed as a vector series and the compressed representation of a regular stroke can also be reduced to a vector series, it is easy to augment or reduce a character to the required size by correspondingly scaling each vector in the vector series. But great efforts must be made to control quality precisely during scaling. Different scaling methods are preferably used for the following two situations:

(a) For the width of a regular stroke,
width after scaling=[(width before scaling)×(scale factor)],
here scale factor=required size/basic size,
[A] represents the integral part of A;

(b) For any vector other than those corresponding to the width part of regular stroke,
$\Delta x$ of the vector after scaling=[(x coordinate at the end of the vector before scaling)×(scale factor)]−[(x coordinate at the beginning of the vector before scaling)×(scale factor)]
$\Delta y$ of the vector after scaling=[(y coordinate at the end of the vector before scaling)×(scale factor)]−[(y coordinate at the beginning of the vector before scaling)×(scale factor)]
here [A] represents the integral part of A.

In essence, the method used in b is to scale each node first and then obtain $\Delta x$ and $\Delta y$ of scaled vector by computing the difference between the coordinates of two respected scaled nodes; the method used in a is to scale the length of vector directly. Method b requires more computation, but rounding off errors will not be accumulated during the scaling of a series of vectors.

If method a were used to scale a series of vectors in irregular strokes, intolerable distortion would be incurred by the accumulation of rounding off errors, whereas if method b were used to scale the width part of regular strokes, the width of regular strokes after scaling could not be precisely controlled. For example, if two horizontal regular strokes of a 10.5 point Song typeface Chinese character have the same width of 2 units on a grid with 96×96 units and if the character size is to be decreased to 9 point with smaller dot matrix, the width of two horizontal strokes might be different after scaling by method b: one of them might become 1 unit; and the other would remain 2 units because of their different Y positions on the grid.

11

**0 095 536**

The result is intolerable and can be avoided by using method a to scale the width of three types of regular strokes.

The scaling is performed during step a of the transformation procedure described above and can be achieved by using a PROM as follows:

for each principal character size, there is a PROM whose address is the coordinate before scaling and whose contents are the integral part of the product of the coordinate before scaling (i.e. the address of the PROM) and the scale factor for that character size, and

for other character sizes, the scaling operation is done by first referencing the PROM for some principal character size and then performing addition and shift operations.

For example, 12 point is a principal character size; 36 point (three times of 12 point) is not a principal character size and there is no PROM for it but its scaling operation can be done by first referencing the PROM for 12 point, then shifting the result up one position, and then adding it to the value before shift (Note: $3 \times A = 2 \times A + A$).

According to statistics, regular strokes account for more than half of strokes in Chinese characters and precise control of their width during scaling has a great effect on output quality. Besides the above measure, two bits can be included in the 32-bit compressed representation for horizontal stroke of Song typeface characters described above to express precisely minor variation of width, which is less than one unit on a 96×96 grid. For example, width variation bits "10" denote the normal width of 2 units; and "01" denote a width of 1.8 units on a 96×96 grid. Because 1.8 units cannot be precisely expressed on a 96×96 grid, both of them occupy 2 units on a 96×96 grid. However when a character size is decreased to 7.875 point, difference in width of above two horizontal strokes will be observed: the former occupies 2 units and the latter occupies only 1 unit. 2-bit width variation is very useful in securing quality during scaling for Chinese characters containing a large number of regular strokes.

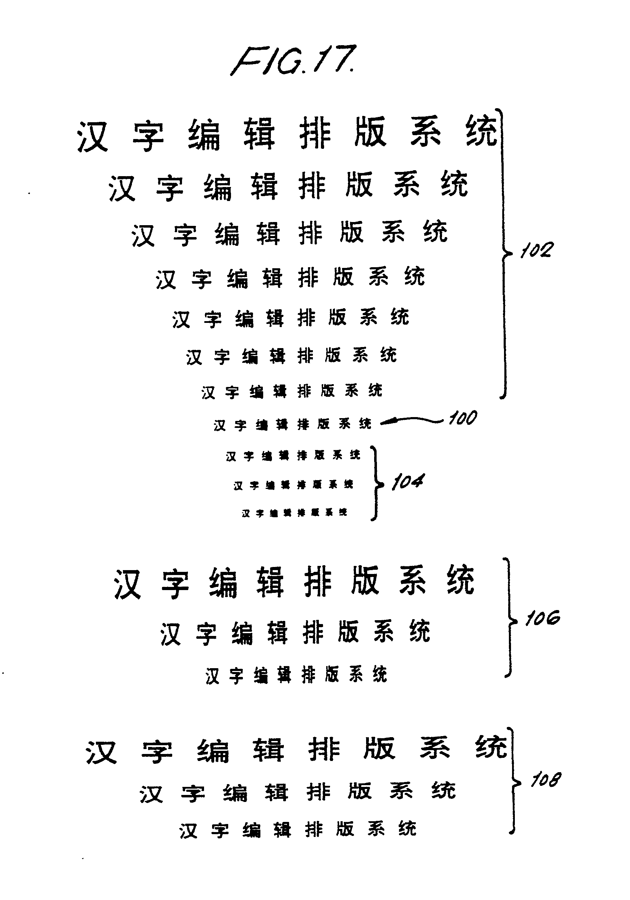

Figure 17 illustrates how characters can be scaled from a basic character size shown as the line 100. This line shows 8 characters in boldface type, and the portion marked 102 shows various stages of increased size. Characters which can be formed from the line 100 by equal enlargement in the X and Y directions whilst the portion marked 104 shows various stages of decreased size characters which can be formed from the line 100 by equal reductions in the X and Y directions.

In the areas 106 and 108 font variants are shown which can be formed again from the basic size characters in the line 100 by greater change in the Y and X directions relative the X and Y directions, respectively.

In all cases an excellent quality of reproduction is possible.

According to a further aspect of the present invention a complex page layout for a laser typesetter with which output is made by a raster pattern, is generated from the dot matrix prepared.

The arrangement used to prepare the dot matrix can be connected to a drum type laser typesetter with four laser beams in parallel. In order to guarantee very high output precision, the main mechanical parts of the laser typesetter move continuously and any pause of the raster output is not allowed during the output of a whole page. Therefore, the generation of complex page layout for a laser typesetter is much more difficult than the case of a CRT where page layout can be generated on the screen character by character and the generation can pause at any point. It would be time-consuming and unacceptable to buffer the dots of an entire page layout (about $10^8$ bits) onto disc store before output of that page. As a result, the generation of the dot matrix by the arrangement described above must always be faster than the raster output of the laser typesetter in any circumstances. Any delay in supplying data would result in error on the output film.

In this further aspect of the invention, the above difficulties can be overcome by hardware-software integrated design in which a new method of describing page layout and a new technique of generating characters section by section are used.

The dot matrix producing device is connected to a general purpose computer, which is shared by a lot of terminal users and supports a dedicated time sharing operating system and a composition language compiler. Users may define the required page layouts by using various composition commands contained in the language, which are intermixed with the text to be composed and are interpreted by the compiler to produce the necessary page layout description information.

A page is divided into rows and each row contains a variable number (e.g. up to 64) of sections with each section consisting of a predefined fixed number (e.g. 8, 16 or 32) of scan lines. During the output of a page by the laser typesetter, only two consecutive sections of the page layout are buffered into two alternative buffers (RAM) with one buffer being fetched by the laser typesetter for raster output and another buffer being filled by the device which generates dot matrices of characters. This means that the dot matrices of a series of characters in a row are generated and buffered not character by character but rather section by section. For example, if two alternative output buffers are named buffer A and buffer B and if there are M characters in a row, then the order of generation and buffering of dot matrices for the row is as follows:

The first section of the first character into appropriate location of buffer A, then the first section of the second character into appropriate location of buffer A,

. . . . . . . . . . . . . . . . . . . . . . . . . . . . . . . . . . . . . . . . . . . . .

then the first section of the Mth character into appropriate location of buffer A.

12

When the first section of all M characters has been generated and buffered into buffer A, the device begins to generate the second section of these M characters and put into buffer B while buffer A is being fetched by the laser typesetter for raster output. The above operation is continued until all the sections of the current row are generated, buffered and output.

The division of a page into rows and the division of each row into sections is made by software of the general purpose computer connected to the present device. Normally the rows correspond to natural lines and in most cases each row contains only a natural line of characters. The sole difference is that the number of scan lines contained in each row must be the multiple of the predefined fixed number of scan lines in a section. If, for example, the predefined fixed number is 8, then a row may contain, for example, 120, or 128 or 136 scan lines but 129 scan lines are not allowed. Such a division of page layout is especially beneficial to the simplification of the dot matrix producing device, which allows the use of only two small alternative output buffers to generate any complex page layout at high speed for raster output. If a scan line of the largest page on the film to be exposed by the laser consists of 8192 dots, then the capacity of the output buffer should be 8×8192 bits (here 8 is the predefined fixed number of scan lines in each section).

The information for precise description of page layout is produced by and can be fetched row by row from a general purpose computer and is specially designed to cater for the need of generating and buffering characters section by section. The description information for a row is temporarily stored in a local memory during generation of dot matrices and is arranged in the order of rows and can be composed of five types of 16-bit indicators which will be described in detail later. Some brief explanation is given here.

The description information for each row begins with a 16-bit "beginning of row" indicator which marks the beginning of a row and indicates the number of sections it contains. A scan line counter is used to record how many sections have been processed. If the contents of this counter reach the value designated in the "beginning of row" indicator, it means that all the sections in the current row have been processed. Each character in the row must be accompanied by a "X position" indicator which defines its absolute X position on the page. Y position of the characters is defined by a "Y position" indicator, which can be shared by a series of characters. Instead of defining the absolute Y position on the page, it designates the relative Y position of the character (or characters) in the current row, that is, the difference in Y direction between the first line of the character and the first line of the current row. It should be noted that this value may be negative as well as positive. A negative value means that the character crosses two rows, that is, the upper part of the character lies in the above row, and the lower part is in the current row. This situation might occur in some complex page layout and cannot be avoided by careful division of the page because vertical arrangement of newspaper headlines is allowed and complex mathematical formula cannot be explicitly divided into separate rows without character crossing. The distinctive feature of "Y position" indicator makes it easier to generate and buffer characters section by section. The value defined in "Y position" indicator combined with the scan line counter is used to determine which section of the character is to be generated during each transformation. The scan line counter is cleared when a new row is encountered and is incremented by N when a section of all characters in the row has been processed (here N is the predefined fixed number of scan lines contained in a section). Within a character, the beginning Y position of the current section to be generated is equal to the difference between the contents of the scan line counter and the relative Y position defined by the "Y position" indicator.

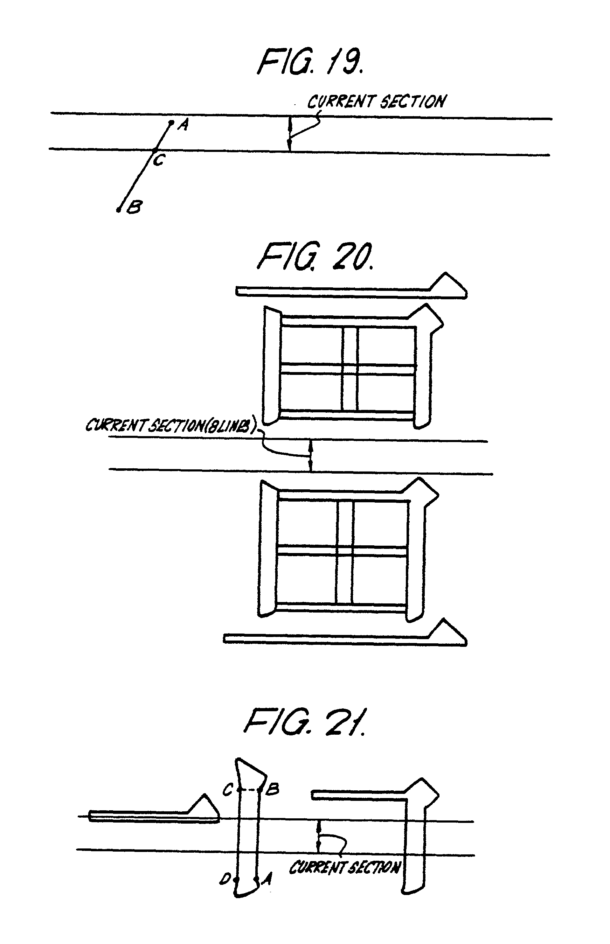

An example is shown in Figure 18, where 120 scan lines are contained in the row and the relative Y position of the character defined by "Y position" indicator is 13. The predefined fixed number of scan lines in a section is assumed to be 8. During the processing of the first section of the row, the contents of the scan line counter are zero and thus the beginning Y position of the current section within the character, which is to be generated, is −13. This means that section [−13, −6] of the character should be generated during the processing of the first section of the row. Because the Y axis of a character grid begins with zero and directs downwards as shown in Figure 12, section [−13, −6] is above the character and no dot matrix will be generated. But during the processing of the second section of the row, the scan line counter becomes 8 and section [−5, 2] of the character should be generated, which means that the first three lines (0, 1, 2) of the character are to be generated, that is, any vector of the character lying (or partly lying) in the first three lines should be transformed into dot matrix (here only vectors AB, CA). During the processing of the third section of the row, section [3, 10] of the character should be generated, and so on.

A yet further feature of the invention relates to the technique of generating characters section by section at high speed.

Before the transformation of each vector into a dot matrix, a test is made as to whether the vector (or part of it) is in the section currently being generated and buffered by, for example, comparing the Y positions of the start point and the end point of the vector with the Y position of the current section as follows:

if both the start point and the end point of the vector are above or below the current section, then the vector lies outside the current section and can be completely skipped,

otherwise the vector (or part of it) is in the current section and must be transformed into dot matrix, but during transformation, whenever it is detected that the remaining part of the vector is outside the current section, the processing of the vector is terminated before reaching its end point and the next vector is tested and processed.

13

Transformation into a dot matrix is performed only for those vectors which lie (or partly lie) in the current section.

Steps b and c described above for transforming of the compressed representation into a dot matrix are time-consuming because a large number of dots has to be dealt with, but steps a and b can be performed in parallel with step c by using two alternative buffers to store a section of marked dot matrix for each of two separate characters. Step c is performed only for a section of dot matrix; and step b is performed only for those vectors which lie (or partly lie) in the current section. Step a must be performed for all the vectors of a character if the character is not entirely above (or below) the current section. But most vectors would be outside the current section and can be skipped. Although more computations are required by the method of generating characters section by section, it is easy to obtain a high generating speed by using bipolar IC and micro-programming techniques. If the predefined fixed number of scan lines contained in a section is 8, a generating speed of 150 full Chinese characters per second can be reached easily; if the predefined number becomes 32, then the generating speed could be increased to 300 characters per second.

When the laser beam outputs are in parallel, multiple 2-bit depth counters can be used to facilitate the buffering of parallel dots generated from multiple lines of a marked dot matrix into the same location of the output buffer, as required by a laser typesetter with multiple outputs in parallel.

A series of measures can be taken to increase generating speed. Some examples are given below.

(a) During processing the first section of the row shown in Figure 18, the character is entirely below the current section and can be completely skipped without the test and processing of its strokes.

During processing of the last section of the row shown in Figure 18, the character is entirely above the current section and can also be completely skipped.

(b) During the processing of vector AB in Figure 19, when point C is reached, the remaining part of the vector, which is outside the current section, can be skipped and the device continues to test and process the next vector beginning with B.

(c) All the regular strokes in Figure 20 can be completely skipped without the test and processing of each vector. Thus a test can be made on whether a regular stroke of a Chinese character is entirely above or below the current section by estimating the highest point and lowest point of the regular stroke, and if the estimated highest point is below the current section, or if the estimated lowest point s above the current section, the regular stroke is skipped.

(d) All the starting feature, ending feature and turning feature of the regular strokes in Figure 21 can be skipped without the test and processing of their corresponding vector series. Thus, during the processing of regular strokes, tests can be made on:

(a) whether the ending feature of horizontal regular stroke is entirely above the current section,

(b) whether the starting feature of vertical regular stroke is entirely above the current section,

(c) whether the turning feature of turn regular stroke is entirely above the current section, and

(d) whether the ending feature of vertical or turn regular stroke is entirely below the current section, and if the test result is true, the corresponding part of regular stroke can be skipped. For example, after vector AB of the vertical stroke in Figure 21 is processed, the device knows that point B is already above the current section and therefore the entire starting feature of the vertical stroke can be skipped by directly jumping to point C for the processing of vector CD.

It is time-consuming to process the starting, ending and turning features because they are composed of vector series. Complete skip might increase the speed considerably.

Overwriting two or more fonts onto a single character position can be allowed to compose complex image where a Chinese character may have a pattern or vignette as its background and can be implemented by the following operations on the output buffer:

(a) whenever the data of the output buffer is fetched by the laser typesetter, it is cleared to zero, and

(b) when the data of a section of final dot matrix for a character is to be written into the output buffer, it will be logically added to the original contents of the output buffer.

All the above tests can be made by a microprogram at high speed and low cost.

The selection of the required Chinese characters from disc store and transmission of these characters to the local memory of the device will now be described.

Using the data compression technique described above, the storage required by 650,000 Chinese characters in different typefaces and sizes is reduced from $2 \times 10^9$ bytes to $5 \times 10^6$ bytes. This is still large and all the characters have to be stored on removable discs to reduce hardware costs. Because the output speed of a laser typesetter is higher or much higher than the data supplying speed of a removable disc, especially in the worse case where the arm of the disc would have to move a long distance, and because any pause is not allowed during the raster output of the laser typesetter, access to removable disc cannot be permitted whenever the raster output begins. A local memory is therefore required and can be a small random access memory, which can store 4,000 to 5,000 different Chinese characters in compressed representation.

Numerous typefaces and a very large number of Chinese character are used in various publications. But for a specific book or a copy of newspaper on a specific day, the number of Chinese characters used is limited. For example, about 3,000 Chinese characters in two typefaces might be used for text and footnote of a book, and less than 300 Chinese characters in boldface and imitation Song typeface might be used for headlines of the book. Normally the total number of the characters occurring in a book would be less than

14

# 0 095 536

3,500 (here different typefaces have been accounted). These characters can be selected from the disc store and transmitted to the local memory. During the output of the book, only the local memory is accessed by the character generator. This selection is made by the software of the general purpose computer connected to the present device after statistics determining which Chinese characters are used in the text to be outputted during reviewing of the text by the software.

There is a main typeface in each book, that is the typeface for most part of the text. The number of main typeface Chinese characters occurring in a book is usually much larger than that of other typefaces of Chinese characters. In most publications, Song typeface is used as the main typeface. Sometimes imitation Song typeface or regular script typeface is also used as the main typeface. A user can denote the main typeface by a composition command. The most frequently used Chinese characters e.g. 3,000, in the main typeface with the internal code numbers from 0 to 2999 may be always transmitted to the local memory from the disc store of the general purpose computer without any selection so as to reduce the amount of processing required by the statistics and selection. It should be noted that these 3,000 characters would account for over 80% of the characters occurring in a book and thus the processing time required by the statistics and selection for other characters is negligible as compared with the time of raster output.

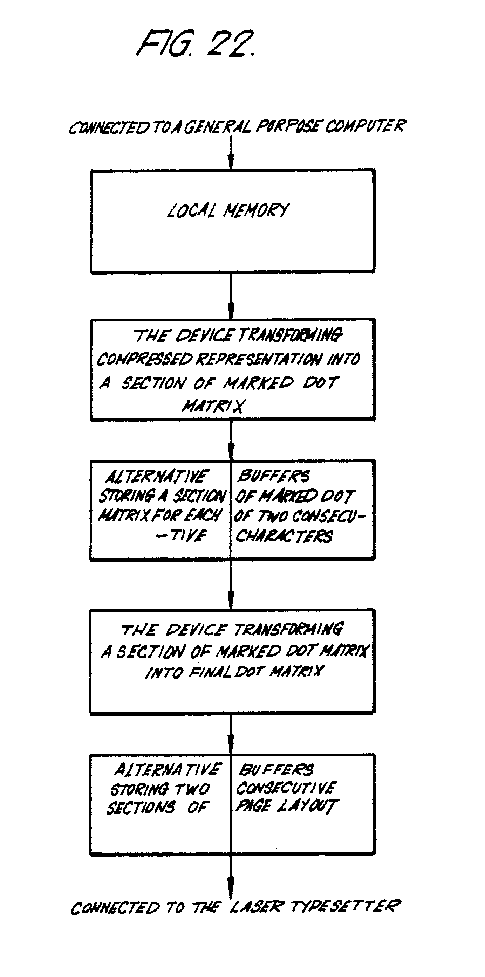

By way of example, Figure 22 shows a block diagram of a preferred embodiment of the present invention.

The most obvious advantage of the present device is good cost performance ratio. Generating speeds of about 300 characters per second can be easily obtained and higher speeds of about 800 characters per second are possible. Because no access to a disc is required during the raster output, the low access speed removable discs need no longer be the bottleneck of a Chinese character typesetting system. Cheap bipolar micro-processor lends itself to the implementation of high speed Chinese character generator described above.

## Claims

1. A method of representing a character image of a resolution of from 17 to at least 50 lines per millimeter in a compact form for computer storage and then transforming that resulting representation into a dot matrix ready for display, characterised in that the strokes of a character are classified into regular strokes including horizontal, vertical and turn strokes mainly composed of straight segments, and irregular strokes in the form of curves, and different compressed representations are used respectively:

for regular strokes, a 24 to 48 bits compressed representation is used to describe the beginning X, Y coordinates, length, width, starting feature, ending feature, turning feature and slant, and

for irregular strokes, e.g. of Chinese characters and characters of other languages, a series of vectors (approximately straight segments) are used to approximate to the stroke outline with each vector represented by directed increments ($\Delta X$, $\Delta Y$) of X, Y coordinates and a number of different cases of increments are discriminated to make the representation more compact, and in that:

a) the resulting compressed representation of regular strokes is reduced to a sequence of vectors with each vector expressed as an 8-bit signed X increment $\Delta X$ and an 8-bit signed Y increment $\Delta Y$ and reducing different compressed representations of vector series in irregular strokes to a unified form in which each vector is expressed as an 8-bit signed X increment $\Delta X$ and an 8-bit signed Y increment $\Delta Y$, and optionally scaling each vector to generate a character of the required size,

b) each sequence of vectors in the unified form is transformed into a so-called marked dot matrix in which each dot position occupies two bits marking one of the four situations of that dot:
   1) beginning of black section (B-mark),
   2) end of black section (E-mark),
   3) isolated black dot (I-mark),
   4) vacancy (V-mark), and

c) the marked dot matrix is transferred into a final dot matrix and loaded into an appropriate location in an output buffer to form part of a page layout.

2. A method as claimed in Claim 1 in which the various shapes of starting, ending and turning features of the regular strokes are numbered and stored as a series of approximate vectors in a main memory, and only the ordinal number not the shape is included in the compressed representations of the regular strokes to reduce the information required and this is then used by a character generator as an address to access the corresponding shape.

3. A method as claimed in Claim 1 or Claim 2 in which 24 or 32 bits are used to represent a horizontal stroke, 32 or 40 bits for a vertical stroke and 40 or 48 bits for a turn stroke of a Chinese typeface.

4. A method as claimed in any preceding claim in which N consecutive vectors occurring in the same quadrant with $\Delta X$ and $\Delta Y$ which are all less than 16 is represented by the following N+1 bytes:

the first control byte denotes the number N and the quadrant in which vectors lie, and

each of the subsequent N bytes represents a vector with a 4 bits defining the absolute value of $\Delta X$ (0—15) and 4 bits for $\Delta Y$ (0—15).

5. A method as claimed in any preceding claim in which N consecutive vectors with $\Delta X$, $\Delta Y$ which are all less than 8 are represented by the following N+1 bytes:

the first control byte denotes the number N, and

15

each of the subsequent N bytes represents a vector with 2 bits defining the quadrant in which the vector lies, 3 bits defining the absolute value of $\Delta X$ (0—7) and 3 bits for $\Delta Y$ (0—7).

6. A method as claimed in any preceding claim in which any vector with $\Delta X$, $\Delta Y$ less than 64 is represented by 2 bytes.

7. A method as claimed in any preceding claim in which the transformation of a vector into the nearest digitised marked dot matrix comprises:

for a vector with $\Delta X \geqslant \Delta Y$, X is varied (incremented or decremented by 1) in each step, whether Y is varied is determined through addition and comparison,

from the start point of the vector with an initial Acc=0, in each step, Acc+$\Delta Y \rightarrow$Acc and then Acc is compared with $\Delta^X/_2$:

if Acc$\geqslant \Delta^X/_2$, then Y is varied (incremented or decremented by 1) and Acc$-\Delta X \rightarrow$Acc, continue to next step,

if Acc$< \Delta^X/_2$, then Y remains unchanged, continue to next step,

and repeating these steps until the number of steps being executed reaches the value of $\Delta X$.

8. A method as claimed in any preceding claim in which the 2-bit mark of marked dot matrix at each dot position of a vector (excluding the node) is determined jointly by the quadrant in which the vector lies and by whether Y is varied in the step beginning with or ending at that dot, and the 2-bit mark at the node of two vectors is determined jointly by the quadrants in which the two vectors lie and by whether Y is varied in the steps beginning with and ending at that node.

9. A method as claimed in any preceding claim in which at some dot positions of the marked dot matrix, the 2-bit mark is written more than once to allow intersection of two or more strokes in a Chinese character and the final 2-bit mark of the marked dot matrix is determined jointly by the old mark previously written and by the mark to be written as follows:

| Old mark | Mark to be written | Final mark |
|:---:|:---:|:---:|
| V | V | V |
| V | B | B |
| V | E | E |
| V | I | I |
| B | V | B |
| B | B | B |
| B | E | I |
| B | I | B |
| E | V | E |
| E | B | I |
| E | E | E |
| E | I | E |
| I | V | I |
| I | B | B |
| I | E | E |
| I | I | I |

10. A method as claimed in any of Claim 9 in which a 2-bit depth counter is used to record the depth of a B-mark as follows:

(a) when a B-mark is encountered, the depth counter is incremented by 1,

(b) when an E-mark is encountered, the depth counter is decremented by 1, and

(c) when an I-mark or V-mark is encountered, the depth counter remains unchanged.

16

11. A method as claimed in Claim 10 in which the transformation of a marked dot matrix into a final dot matrix to be outputted is implemented as follows:

(a) B-mark, E-mark or I-mark of the marked dot matrix is always transformed into "1" in the corresponding position of the final dot matrix, and

(b) V-mark is transformed into "1" if the depth counter is greater than zero, but is transformed into "0" if the depth counter is zero.

12. A method as claimed in any preceding claim in which a single compressed representation of a character is used to generate different sizes of character by scaling each vector of the character and in order to minimize distortion two different scaling methods are used as follows:

(a) for the width of regular stroke in Chinese characters, the width after scaling is obtained by directly scaling the width, that is,

width after scaling=[(width before scaling)×(scale factor)]

(here [A] represents integral part of A), and

(b) for any vector other than those corresponding to the width part of regular stroke, two nodes corresponding to the start and end points of the vector to be scaled are scaled first, and then $\Delta X$, $\Delta Y$ of the vector after scaling are obtained by computing the difference between the coordinates of the two respective scaled nodes.

13. A method as claimed in Claim 12 in which a PROM is used to increase scaling speed as follows: for each principal character size, there is a PROM whose address is the coordinate before scaling and whose contents are the integral part of the product of the coordinate before scaling (i.e. the address of the PROM) and the scale factor for that character size, and for other character sizes, the scaling operation is done by first referencing the PROM for some principal character size and then performing addition and shift operations.

14. A method as claimed in any preceding claim which is used to supply page layout in dot form to a laser typesetter with a raster output pattern in which any pause of the raster output is not allowed during the output of a whole page because of the continuous movements of the mechanical parts of the laser typesetter.

15. A method as claimed in Claim 14 in which a page layout in dot form is divided into rows, each row containing up to 64 sections with each section consisting of a predefined fixed number of scan lines, and neither the entire page layout nor the layout of a row but only two consecutive sections of it are buffered into two alternative output buffers with the contents of one buffer being fetched by the laser typesetter for raster output whilst the other buffer is being filled in which not the whole dot matrix but only one section of a character is generated and buffered during each transformation.

16. A method as claimed in Claim 15 in which the transformation of the compressed representation into a section of marked dot matrix for the present character is performed in parallel with the transformation of a section of marked dot matrix into a section of final dot matrix for the preceding character, by using two alternative small stores to buffer a section of a marked dot matrix for each of two consecutive characters.

17. A method as claimed in Claim 15 or Claim 16 in which the information for precise description of page layout is arranged in the order of rows and composed of the following 16-bit indicators:

(a) "beginning of row" indicator which marks the beginning of a row, indicates the number of sections it contains which is used by the device to determine whether all the sections in the current row have been processed and identifies (1) a normal row or (2) the last row of a page or (3) the last row of last page,

(b) "character image address" indicator which denotes the relative address of the device's local memory where the image of the character can be found,

(c) "X position" indicator which designates the X position of a character on the page and is used to put the generated section of the dot matrix into the appropriate location of the alternative section buffers,

(d) "Y position" indicator which designates the relative Y position of the subsequent characters in the current row, that is, the difference in Y direction between the first line of the character and the first line of the current row and which is used to decide which section of dot matrix of the character is to be generated during each transformation, and

(e) "character size" indicator which designates character size in X and Y directions separately to allow the generation of font variants (lengthened or shortened characters) by using different scale factors in X and Y directions.

18. A method as claimed in any of claims 15 to 17 in which a test on whether the vector (or part of it) is in the section currently being generated and buffered is made by comparing the Y positions of the start point and the end point of the vector with the Y position of the current section, and the vector lies outside the current section can be completely skipped without transformation so as to increase generating speed.

19. A method as claimed in any of claims 15 to 18 in which statistics are made on which characters are used in a series of pages or even a book to be outputted, and only those characters which actually occur will be selected from the disc store and transmitted to the local memory.

**Patentansprüche**

1. Verfahren zur Darstellung eines Zeichenbildes mit einer Auflösung von 17 bis wenigstens 50 Zeilen pro Millimeter in kompakter Form zur Abspeicherung in einem Computer und zur sich darauf anschließenden Transformation der so erhaltenen Darstellung in eine darstellungsfähige Punktmatrix, dadurch gekennzeichnet, daß die Linienelemente der Zeichen in reguläre Linien wie horizontale, vertikale und gebogene Linien, die im wesentlichen aus geraden Linien zusammengesetzt sind, und in irreguläre Linien in Form von Kurven aufgegliedert sind und dementsprechend die folgenden unterschiedlichen kompakten Darstellungen verwendet werden:

für die regulären Linien eine 24 bis 48 bits komprimierte Darstellung, um die Ursprünge der X, Y-Koordinaten, die Länge, Breite, Anfang, Ende, Verdrehung und Schrägstellung zu beschreiben,

für die irregulären Linien, d.h. für chinesische Zeichen und Zeichen anderer Sprachen, eine Reihe von Vektoren (annäherungsweise gerade Segmente) zum Annähern an die Kontur der Linienelemente, wobei jeder Vektor durch gerichtete Inkremente ($\Delta$X, $\Delta$Y) der X, Y-Koordinaten dargestellt wird und unter einer Reihe anderer Inkremente unterschieden wird, um die Darstellung kompakter zu gestalten,

daß die resultierende komprimierte Darstellung der regulären Linien auf eine Sequenz von Vektoren reduziert wird, wobei jeder Vektor als ein 8-bit Inkrement $\Delta$X in X und ein 8-bit Inkrement $\Delta$Y in Y ausgedrückt wird, und verschiedene komprimierte Darstellungen von Vektorreihen von irregulären Linien auf eine vereinheitlichte Form reduziert werden, in der jeder Vektor als ein 8-bit Inkrement $\Delta$X in X und ein 8-bit Inkrement in Y ausgedrückt wird, und jeder Vektor optional mit einem Maßstab versehen wird, um ein Zeichen bestimmter Größe zu generieren,

daß jede Sequenz von Vektoren in der vereinheitlichen Form in eine sogenannte markierte Punktmatrix transformiert wird, in der jede Punktlage zwei bits besetzt, die eine der vier folgenden Lagen des Punktes markieren:

1) Anfang des Schwarzbereiches (B-Marke)
2) Ende des Schwarzbereiches (E-Marke)
3) isolierter schwarzer Punkt (I-Marke)
4) Leerstelle (V-Marke), und

daß die markierte Punktmatrix in eine End-Punktmatrix transformiert und in einen geeigneten Bereich eines Output-Buffers geladen wird, um einen Teil eines Seitenlayoutes zu bilden.

2. Verfahren nach Anspruch 1, dadurch gekennzeichnet, daß die verschiedenen Formate der Anfangs-, End- und Verdrehmerkmale der regulären Linien nummeriert werden und als eine Reihe von angenäherten Vektoren in einem Hauptspeicher abgespeichert werden und nur die Ordnungszahl, nicht das Format in die komprimierten Darstellungen der regulären Linien aufgenommen werden, um die erforderliche Information zu reduzieren, woraufhin dies von einem Zeichengenerator als Adresse verwendet wird, um auf das korrspondierende Format zuzugreifen.

3. Verfahren nach Anspruch 1 oder 2, dadurch gekennzeichnet, daß 24 oder 32 bits für die Darstellung einer horizontalen Linie, 32 oder 40 bits für die Darstellung einer vertikalen Linie und 40 oder 48 bits für die Darstellung einer gebogenen Linie eines chinesischen Zeichens verwendet werden.

4. Verfahren nach einem der Ansprüche 1 bis 3, dadurch gekennzeichnet, daß N aufeinanderfolgende Vektoren in demselben Quadranten mit $\Delta$X und $\Delta$Y alle kleiner als 16 dargestellt werden durch die folgenden N+1 Bytes:

Das erste Kontrollbyte bezeichnet die Number N und den Quadranten, in welchem die Vektoren liegen, und jedes der nachfolgenden N Bytes stellt einen Vektor dar, wobei 4 bits den absoluten Wert von $\Delta$X (0—15) und 4 bits den absoluten Wert von $\Delta$Y (0—15) bestimmen.

5. Verfahren nach einem der Ansprüche 1 bis 4, dadurch gekennzeichnet, daß N aufeinanderfolgende Vektoren mit $\Delta$X, $\Delta$Y alle kleiner als 8 dargestellt werden durch die folgenden N+1 Bytes:

Das erste Kontrollbyte bezeichnet die Nummer N, und jedes der nachfolgenden N Bytes stellt einen Vektor dar, wobei 2 bits den Quadranten bestimmen, in welchem der Vektor liegt, und je 3 bits den absoluten Wert von $\Delta$X (0—7) und $\Delta$Y (0—7) bestimmen.

6. Verfahren nach einem der Ansprüche 1 bis 5, dadurch gekennzeichnet, daß jeder Vektor mit $\Delta$X, $\Delta$Y kleiner als 64 durch 2 Bytes dargestellt wird.

7. Vektor nach einem der Ansprüche 1 bis 7, dadurch gekennzeichnet, daß die Transformation eines Vektors in die nächste digitalisierte markierte Punktmatrix aus den folgenden Schritten besteht:

a) Für einen Vektor mit $\Delta$X$\geqslant$$\Delta$Y wird X in jedem Schritt variiert (um 1 inkrementiert oder dekrementiert), gleich, ob Y varriert und durch Addition und Vergleich bestimmt wird,

b) vom Startpunkt des Vektors mit anfänglichem $A_{cc}$=0 wird in jedem Schritt $A_{cc}+\Delta Y \rightarrow A_{cc}$ berechnet und $A_{cc}$ mit $\Delta$X/2 verglichen, wobei, falls $A_{cc}\geqslant\Delta X/2$, Y varriert (um 1 inkrementiert oder dekrementiert) und $A_{cc}-\Delta X \rightarrow A_{cc}$ gesetzt wird und der nächste Schritt ausgeführt wird, oder, falls $A_{cc}<\Delta X/2$, Y unverändert bleibt und der nächste Schritt ausgeführt wird, und

c) Wiederholung der genannten Schritte solange, bis die Anzahl der ausgeführten Schritte den Wert $\Delta$X erreicht.

8. Verfahren nach einem der Ansprüche 1 bis 7, dadurch gekennzeichnet, daß die 2-bit-Marke der markierten Punktmatrix an jeder Punktlage eines Vektors (mit Ausnahme des Knotenpunktes) gemeinsam durch den Quadranten, in welchem der Vektor liegt, und dadurch bestimmt wird, ob Y mit dem Schritt, der mit dem Punkt beginnt oder an diesem endet, verändert wird und daß die 2-bit-Marke am Knotenpunkt . zweier Vektoren gemeinsam durch die Quadranten, in denen die zwei Vektoren liegen, und dadurch

18

# 0 095 536

bestimmt wird, ob Y mit den Schritten, die mit dem Knotenpunkt beginnen oder an diesem enden, verändert wird.

9. Verfahren nach einem der Ansprüche 1 bis 8, dadurch gekennzeichnet, daß an einigen Punktlagen der markierten Punktmatrix die 2-bit-Marke mehr als einmal eingeschrieben wird, um eine Kreuzung von zwei oder mehreren Linien in einem chinesischen Zeichen zu ermöglichen, und daß die 2-bit-Endmarke der markierten Punktmatrix gemeinsam durch die alte, vorher eingeschriebene Marke und durch die Marke bestimmt wird, die folgendermaßen einzuschreiben ist:

| Alte marke | Einzuschreibende marke | Endmarke |
|:---:|:---:|:---:|
| V | V | V |
| V | B | B |
| V | E | E |
| V | I | I |
| B | V | B |
| B | B | B |
| B | E | I |
| B | I | B |
| E | V | E |
| E | B | I |
| E | E | E |
| E | I | E |
| I | V | I |
| I | B | B |
| I | E | E |
| I | I | I |

10. Verfahren nach Anspruch 9, dadurch gekennzeichnet, daß ein Zähler mit 2 bis Tiefe verwendet wird, um die Teife einer B-Marke wie folgt zu registrieren:
   a) Wenn eine B-Marke anliegt, wird der Zähler um 1 inkrementiert,
   b) wenn eine E-Marke anliegt, wird der Zähler um 1 dekrementiert, und
   c) wenn eine I-Marke oder V-Marke anliegt, bleibt der Zähler unverändert.

11. Verfahren nach Anspruch 10, dadurch gekennzeichnet, Transformation einer markierten Punktmatrix in eine auszugebende End-Punktmatrix wie folgt ausgeführt wird:
   a) Eine B-, E- oder I-Marke der markierten Punktmatrix wird stets in eine "1" in der korrespondierenden Lage in der End-Punktmatrix transformiert, und
   b) eine V-Marke wird in eine "1" transformiert, wenn der Zählerstand größer als 0 ist, und zu "0" gesetzt, wenn der Zählerstand 0 ist.

12. Verfahren nach einem der Ansprüche 1 bis 11, dadurch gekennzeichnet, daß eine einzelne komprimierte Darstellung eines Zeichens verwendet wird, um unterschiedliche Zeichengrößen zu generieren, indem jeder Vektor des Zeichens mit einem Maßstab versehen wird, wobei zur Minimierung von Verzerrungen zwei unterschiedliche Skalierungsverfahren angewendet werden:
   a) Für die Breite der regulären Linien in chinesischen Zeichen gilt: die Breite nach Skalierung wird durch direktes Skalieren der Breite erhalten, d.h.:
   Breite nach Skalierung=[(Breite vor Skalierung)×(Maßstabsfaktor)], (wobei [A] der ganzzahlige Teil von A ist),
   b) für jeden Vektor, der nicht mit der Breite einer regulären Linie korrespondiert, gilt:
   Zwei Kreuzungspunkte, die den Start- und Endpunkten des zu skalierenden Vektors entsprechen, werden zuerst skaliert, wonach $\Delta X$, $\Delta Y$ des Vektors nach Skalierung durch die Berechnung der

19

Differenz zwischen den Koordinaten der zwei entsprechenden skalierten Kreuzungspunkte erhalten wird.

13. Verfahren nach Anspruch 12, dadurch gekennzeichnet, daß ein PROM zur Beschleunigung der Skalierungsgeschwindigkeit wie folgt verwendet wird:

Für die Größe jedes Hauptzeichens ist ein PROM vorgesehen, dessen Adresse die Koordinate vor der Skalierung ist und dessen Inhalte die ganzzahligen Teile des Produktes aus der Koortinate vor Skalierung (d.h. der Adresse des PROM) und dem Skalierungsfaktor für diese Zeichengröße ist, wobei für andere Zeichengrößen die Skalierungsoperation dadurch bewerkstelligt wird, daß zunächst der PROM für eine Größe eines Hauptzeichens angesprochen wird und dann Additions- und Verschiebungsoperationen ausgeführt werden.

14. Verfahren nach einem der Ansprüche 1 bis 13, dadurch gekennzeichnet, daß ein Seitenlayout in Punktform an einen Laserdrucker mit einem Raster-Ausgangsmuster gegeben wird, bei dem keine Lücke des Rasteroutputs während der Ausgabe einer ganzen Seite wegen der kontinuierlichen Bewegungen der mechanischen Teile des Laserdruckers zugelassen wird.

15. Verfahren nach Anspruch 14, dadurch gekennzeichnet, daß ein Seitenlayout in Punktform in Reihen unterteilt ist, von denen jede bis zu 64 Abschnitte enthält, die ihrerseits aus einer vorbestimmten festen Anzahl von Zeichen bestehen, und daß weder das ganze Seitenlayout noch das Layout einer Reihe, sondern nur zwei aufeinanderfolgende Abschnitte davon in zwei Outputbuffern zwischengespeichert werden, wobei die Inhalte des einen Buffers vom Laserdrucker für die Rasterangabe geholt werden, während der andere Buffer beschrieben wird, indem zwar nicht die ganze Punktmatrix, sondern nur ein Teil eines Zeichens generiert wird und während jeder Transformation zwischengespeichert wird.

16. Verfahren nach Anspruch 15, dadurch gekennzeichnet, daß die Transformation der komprimierten Darstellung in einen Abschnitt der markierten Punktmatrix für ein vorliegendes Zeichen parallel zu der Transformation eines Abschnittes der markierten Punktmatrix in einen Abschnitt der End-Punktmatrix für das vorhergehende Zeichen vorgenommen wird, indem zwei kleine Speicher dazu verwendet werden, einen Abschnitt der markierten Punktmatrix für jedes der zwei aufeinanderfolgenden Zeichen zwischenzuspeichern.

17. Verfahren nach Anspruch 15 oder 16, dadurch gekennzeichnet, daß die Information für die präzise Beschreibung eines Seitenlayouts in der Reihenfolge von Reihen angeordnet ist und aus den folgenden 16-bit Indikatoren besteht:

a) aus dem "Reihenanfangs"-Indikator, der den Anfang einer Reihe markiert, die Anzahl der in ihr enthaltenen Abschnitte anzeigt und von einer Schaltung dazu verwendet wird, zu bestimmen, ob alle Abschnitte der laufenden Reihe verarbeitet worden sind, und kennzeichnet (1) eine normale Reihe oder (2) die letzte Reihe einer Seite oder (3) die letzte Reihe der letzten Seite,

b) aus dem "Zeichenbildadressen"-Indikator, der die relative Adresse des lokalen Speichers der Schaltung angibt, wo das Bild des Zeichens gefunden werden kann, ·

c) aus dem "X-Lagen"-Indikator, der die X-Lage eines Zeichens auf der Seite angibt und dazu verwendet wird, den generierten Abschnitt der Punktmatrix in eine geeignete Speicheradresse der Abschnittbuffer abzulegen,

d) aus dem "Y-Lagen"-Indikator, der die relative Y-Lage der nachfolgenden Zeichen in der laufenden Reihe angibt, d.h. die Differenz in Y-Richtung zwischen der ersten Zeile des Zeichens und der ersten Zeile der laufenden Reihe, und dazu verwendet wird, zu entscheiden, welcher Abschnitt der Punktmatrix des Zeichens während jeder Transformation zu generieren ist, und

e) aus dem "Zeichengrößen"-Indikator, der die Zeichengröße getrennt in X- und Y-Richtung angibt, um die Generierung von Schrifthöhenvarianten (gestreckte oder verkleinerte Zeichen) unter Verwendung verschiedener Skalierungsfaktoren in X- und Y-Richtung zu ermöglichen.

18. Verfahren nach einem der Ansprüche 15 bis 17, dadurch gekennzeichnet, daß ein Test, ob der Vektor (oder ein Teil davon) in dem gerage generierten und zwischengespeicherten Abschnitt enthalten ist, dadurch ausgeführt wird, daß die Y-Lagen des Start- und Endpunktes des Vektors mit der Y-Lage des laufenden Abschnittes verglichen werden, bzw. ein Test, ob der Vektor außerhalb des laufenden Abschnittes liegt, ohne Transformation ausgelassen werden kann, so daß die Generierungsgeschwindigkeit erhöht wird.

19. Verfahren nach einem der Ansprüche 15 bis 18, dadurch gekennzeichnet, daß eine Statistik darüber angelegt wird, welche Zeichen in einer Reihe von Seiten oder sogar in einem Buch verwendet werden, und daß nur die Zeichen, die tatsächlich verwendet werden, vom Plattenspeicher gelesen und an den lokalen Speicher übertragen werden.

**Revendications**

1. Un procédé de représentation d'une image d'un caractère, avec une résolution allant de 17 à au moins 50 lignes au millimètre, sous une forme compacte, pour stockage dans un ordinateur, et ensuite de transformation de la représentation résultante en une matrice à points prête pour l'affichage, caractérisé en ce que les traits d'un caractère sont classés en traits réguliers comprenant des traits horizontaux, verticaux et de changement de direction, composés principalement de segments rectilignes, et en traits irréguliers en forme de courbes, et en ce que ces différentes représentations comprimées sont utilisées, respectivement:

# 0 095 536

pour des traits réguliers par une représentation comprimée de 24 à 48 bits utilisée pour décrire les coordonnées d'origine X, Y la longueur, la largeur, la caractéristique de départ, la caractéristique de fin, la caractéristique de changement de direction et la pente, et

pour des traits irréguliers, par exemple de caractères chinois et de caractères d'autres langues, par une série de vecteurs (approximativement des segments rectilignes) utilisée pour se rapprocher du contour du trait, chaque vecteur étant représenté par des incréments dirigés ($\Delta X$, $\Delta Y$) de coordonnées X, Y et un nombre de différents cas d'incréments sont discriminés pour rendre la représentation plus compacte, et en ce que:

a) la représentation comprimée de traits réguliers qui en résulte est réduite à une séquence de vecteurs, chaque vecteur étant exprimé sous forme d'un incrément $\Delta X$ de X de 8 bits et doté d'un signe et d'un incrément $\Delta Y$ de Y de 8 bits et doté d'un signe, et les différentes représentations comprimées de séries de vecteurs de traits irréguliers sont réduites sous une forme unifiée dans laquelle chaque vecteur est exprimé sous forme d'un incrément $\Delta X$ de X de 8 bits et doté d'un signe et d'un incrément $\Delta y$ de Y de 8 bits et doté d'un signe, et une graduation de chaque vecteur est effectuée éventuellement pour engendrer un caractère de dimension désirée,

b) chaque séquence de vecteurs sous la forme unifiée est transformée en une matrice dite à points marqués dans laquelle chaque position des points occupe deux bits représentant l'une des quatre situations de ce point:

    1) le début d'une section noire (marque B),
    2) la fin d'une section noire (marque E),
    3) un point noir isolé (marque I),
    4) un blanc (marque V), et

c) la matrice à points marqués est transférée dans une matrice à points définitive et chargée dans un emplacement approprié d'une mémoire tampon de sortie pour former une partie de la disposition d'une page.

2. Un procédé selon la revendication 1, dans lequel les diverses formes des caractéristiques de début, de fin et de changement de direction des traits réguliers sont numérotées et stockées sous forme d'une série de vecteurs approximatifs dans une mémoire principale, et seul le nombre ordinal et non la forme est inclus dans les représentations comprimées des traits réguliers pour réduire l'information nécessaire, et ceci est alors utilisé par un générateur de caractères en tant qu'adresse pour accéder à la forme correspondante.

3. Un procédé selon la revendication 1 ou la revendication 2, dans lequel on utilise 24 ou 32 bits pour représenter un trait horizontal, 32 ou 40 bits pour un trait vertical et 40 ou 48 bits pour un trait de changement de direction de la face d'un caractère chinois.

4. Un procédé selon l'une quelconque des revendications précédentes, dans lequel N vecteurs consécutifs apparaissant dans le même quadrant, dont $\Delta X$ et $\Delta Y$ sont tous inférieurs à 16, sont représentés par les N+1 multiplets suivants:

le premier multiplet de commande désigne le nombre N et le quadrant dans lequel sont situés les vecteurs, et

chacun des N multiplets subséquents représente un vecteur avec 4 bits définissant la valeur absolue de $\Delta X$ (0—15) et 4 bits pour $\Delta Y$ (0—15).

5. Un procédé selon l'une quelconque des revendications précédentes, dans lequel N vecteurs consécutifs, dont $\Delta X$ et $\Delta Y$ sont tous inférieurs à 8, sont représentés par les N+1 multiplets suivants:

le premier multiplet de commande désigne le nombre N, et chacun des N multiplets suivants représente un vecteur, avec 2 bits définissant le quadrant dans lequel se trouve le vecteur, 3 bits définissant la valeur absolue de $\Delta X$ (0—7) et 3 bits pour $\Delta Y$ (0—7).

6. Une procédé selon l'une quelconque des revendications précédentes, dans lequel tout vecteur dont $\Delta X$, $\Delta Y$ sont inférieurs à 64 est représenté par deux multiplets.

7. Un procédé selon l'une quelconque des revendications précédentes, dans lequel la transformation d'un vecteur en une matrice à points marqués numérisés la plus proche comprend:

pour un vecteur dont $\Delta X \geqslant \Delta Y$, la modification de X (incrémenté ou décrémenté de 1) au cours de chaque étape,

la détermination par addition et comparaison du fait de savoir si Y est modifié,

partant du point de départ du vecteur avec au début Acc=0, l'opération à chaque étape Acc+$\Delta Y \rightarrow$Acc, puis comparaison de Acc avec $\Delta X/2$:

    si Acc$\geqslant \Delta X/2$, Y est alors modifié (incrémenté ou décrémenté de 1) et l'opération Acc−$\Delta X \rightarrow$Acc est poursuivie jusqu'à l'étape suivante,
    si Acc$< \Delta X/2$, Y reste alors inchangé et on passe à l'étape suivante,

et la répétition de ces étapes jusqu'à ce que le nombre d'étapes qui est exécuté atteigne la valeur de $\Delta X$.

8. Un procédé selon l'une quelconque des revendications précédentes, dans lequel la marque de 2 bits de la matrice à points marqués pour chaque position des points d'un vecteur (à l'exclusion du point nodal) est déterminée conjointement par le quadrant dans lequel se trouve le vecteur et par le fait de savoir si Y est modifié au cours de l'étape commençant ou finissant en ce point, et la marque de 2 bits au point nodal de

21

deux vecteurs est déterminée conjointement par les quadrants dans lesquels les deux vecteurs sont situés et par le fait de savoir si Y est modifié au cours des étapes commençant ou se terminant en ce point nodal.

9. Un procédé selon l'une quelconque des revendications précédentes, dans lequel, dans certaines positions de points de la matrice à points marqués, la marque de 2 bits est inscrite plus d'une unique fois pour permettre l'intersection de deux ou plusieurs traits d'un caractère chinois, et la marque de 2 bits finale de la matrice à points marqués est déterminée conjointement par la marque ancienne précédemment écrite et par la marque à inscrire, comme suit:

| Ancienne marque | Marque à écrire | Marque finale |
|---|---|---|
| V | V | V |
| V | B | B |
| V | E | E |
| V | I | I |
| B | V | B |
| B | B | B |
| B | E | I |
| B | I | B |
| E | V | E |
| E | B | I |
| E | E | E |
| E | I | E |
| I | V | I |
| I | B | B |
| I | E | E |
| I | I | I |

10. Un procédé selon la revendication 9, dans lequel un compteur de profondeur de 2 bits est utilisé pour enregistrer le profondeur d'une marque B comme suit:

(a) lorsqu'une marque B est recontrée, le compteur de profondeur est incrémenté de 1,

(b) lorsqu'une marque E est rencontrée, le compteur de profondeur est décrémenté de 1, et

(c) lorsqu'une marque I ou une marque V est recontrée, le compteur de profondeur reste inchangé.

11. Un procédé selon la revendication 10, dans lequel la transformation d'une matrice à points marqués en une matrice à points définitive qui doit être émise en sortie est mise en oeuvre comme suit:

(a) une marque E, une marque B ou une marque I de la matrice à points marqués est toujours transformée en "1" dans la position correspondante de la matrice à points définitive, et

(b) la marque V est transformée en "1" si le compteur de profondeur est supérieur à "0", mais est transformée en "0" si le compteur de profondeur est zéro.

12. Un procédé selon l'une quelconque des revendications précédentes, dans lequel une unique représentation comprimée d'un caractère est utilisée pour engendrer différentes dimensions de caractères en graduant chaque vecteur du caractère, et pour minimiser la distorsion, on utilise deux procédés de graduation différents, comme suit:

(a) pour la largeur de traite réguliers de caractères chinois, la largeur, après graduation, est obtenue par une graduation directe de la largeur, c'est-à-dire

largeur après graduation=(largeur avant graduation)×(facteur de graduation)

(ici, (A) représente la partie entière de A), et

(b) pour tout vecteur autre que ceux qui correspondent à la partie en largeur d'un trait régulier, deux points nodaux correspondant aux points de départ et de fin du vecteur à graduer sont d'abord gradués, puis $\Delta X$, $\Delta Y$ du vecteur, après graduation, sont obtenus par calcul de la différence entre les coordonnées des deux points nodaux respectifs et gradués.

22

13. Un procédé selon la revendication 12, dans lequel on utilise une mémoire PROM pour augmenter la vitesse de graduation comme suit:

pour chaque dimension principale des caractères, il existe une mémoire PROM dont l'adresse est la coordonnée avant graduation et dont le contenu est la partie entière du produit de la coordonnée avant graduation (c'est-à-dire l'adresse de la PROM) et le facteur de graduation pour cette dimension du caractère, et pour d'autres dimensions du caractère, l'opération de graduation est réalisée en commençant par référencer la mémoire PROM sur une dimension de caractère quelconque et principale, puis en effectuant les opérations d'addition et de décalage.

14. Un procédé selon l'une quelconque des revendications précédentes, qui est utilisé pour obtenir une présentation de page sous forme de points dans une machine à composer à laser avec un motif de sortie de trame dans lequel aucune pause de sortie de trame n'est autorisée pendant la sortie d'une page entière du fait des mouvements continus des parties mécaniques de la machine à composer à laser.

15. Un procédé selon la revendication 14, dans lequel la présentation d'une page sous forme de points est divisée en rangées, chaque rangée contenant jusqu'à 64 sections, chaque section consistant en un nombre fixe et prédéfini de lignes de balayage, et ni la présentation entière de la page ni la présentation d'une rangée, mais seulement deux sections consécutives de celle-ci sont mises dans deux mémoires tampon à sortie alternative, le contenu d'une mémoire tampon étant cherché par la machine à composer à laser en vue d'une sortie de trame alors que l'autre mémoire tampon est remplie, mémoire dans laquelle ce n'est pas l'ensemble de la matrice à points mais seulement une section d'un caractère qui est générée et mise dans la mémoire tampon pendant chaque transformation.

16. Un procédé selon la revendication 15, dans lequel la transformation de la représentation comprimée en une section de matrice à points marqués concernant le caractère actuel est réalisée en parallèle avec la transformation d'une section de matrice à points marqués en une section de matrice à points définitive concernant le caractère précédent, en utilisant deux petites mémoires alternatives pour mettre en mémoire tampon une section d'une matrice à points marqués pour chacun de deux caractères consécutifs.

17. Un procédé selon la revendication 15 ou la revendication 16, dans lequel l'information concernant la description précise de la disposition d'une page se présente sous forme de rangées ordonnées et composées des indicateurs de 16 bits suivants:

(a) un indicateur de "début de rangée" qui marque le début d'une rangée, indique le nombre de sections qu'elle contient et qui est utilisé par le dispositif pour déterminer si toutes les sections dans la rangée en cours ont été traitées, et identifie (1) une rangée normale, ou (2) la dernière rangée d'une page, ou (3) la dernière rangée de la dernière page,

(b) un indicateur d'"adresse d'image de caractère" qui désigne l'adresse relative de la mémoire locale du dispositif où l'image du caractère peut être trouvée,

(c) l'indicateur de "position X" qui désigne la position X du caractère sur la page et est utilisé pour mettre la section engendrée de la matrice à points à l'emplacement approprié des mémoires tampon de sections alternatives,

(d) un indicateur de "position Y" qui désigne la position relative Y des caractères suivants dans la rangée en cours, c'est-à-dire la différence dans la direction Y entre la première ligne du caractère et la première ligne de la rangée en cours et qui est utilisé pour décider quelle section de la matrice à points du caractère doit être générée pendant chaque transformation, et

(e) un indicateur de "dimension de caractère" qui désigne séparément la dimension du caractère dans les dimensions X et Y pour permettre la génération de variations de polices (caractère allongé ou raccourci) en utilisant différents facteurs d'échelle dans les directions X et Y.

18. Un procédé selon l'une quelconque des revendications 15 à 17, dans lequel un test sur la question de savoir si le vecteur (ou une partie de celui-ci) est dans la section qui est en cours de génération et est mis en mémoire tampon, est réalisé en comparant les positions Y du point de début et du point final du vecteur avec la position Y de la section en cours, et le vecteur situé à l'extérieur de la section en cours peut être complètement sauté sans transformation, de manière à augmenter la vitesse de génération.

19. Un procédé selon l'une quelconque des revendications 15 à 18, dans lequel des statistiques sont faites sur ceux des caractères qui sont utilisés dans une série de pages ou même d'un livre à émettre en sortie, et seuls les caractères qui existent effectivement sont choisis dans la mémoire à disque et transmis à la mémoire locale.

0 095 536

FIG. 1.

BEGINNING

ENDING FEATURE

STANDARD STARTING FEATURE

FIG. 2.

BEGINNING

WIDTH

LENGTH

FIG. 3.

BEGINNING

FIG. 4.

STARTING FEATURE

WIDTH

ENDING FEATURE

BEGINNING

FIG. 5.

STARTING FEATURE

LENGTH

WIDTH

BEGINNING

FIG. 6.

WIDTH

BEGINNING

1

# FIG. 8.

STANDARD STARTING FEATURE

TURNING FEATURE

LENGTH OF HORIZONTAL PART

HORIZONTAL PART

LENGTH OF VERTICAL PART

VERTICAL PART

BEGINNING

ENDING FEATURE

SLANT EDGE

# FIG. 7.

HORIZONTAL PART

VERTICAL PART

BEGINNING

# FIG. 9.

BEGINNING

WIDTH

ENDING FEATURE

LEFT EDGE

LOWER EDGE OF LEFT HALF PART

LENGTH

LOWER EDGE OF RIGHT HALF PART

# FIG. 10.

SLANT

WIDTH

HORIZONTAL PART

TURNING FEATURE

WIDTH

VERTICAL PART

BEGINNING

ENDING FEATURE

# FIG. 11.

STARTING FEATURE

CURVED EXTENSION

BEGINNING

FIG.12.

FIG.13.

FIG.14.

FIG.15.

0 095 536

FIG. 16.

FIG. 18.

4

## FIG.17.

汉 字 编 辑 排 版 系 统
汉 字 编 辑 排 版 系 统
汉 字 编 辑 排 版 系 统
汉 字 编 辑 排 版 系 统
汉 字 编 辑 排 版 系 统
汉 字 编 辑 排 版 系 统
汉 字 编 辑 排 版 系 统    } 102

汉 字 编 辑 排 版 系 统  ← 100

汉 字 编 辑 排 版 系 统
汉 字 编 辑 排 版 系 统    } 104
汉 字 编 辑 排 版 系 统

汉 字 编 辑 排 版 系 统
汉 字 编 辑 排 版 系 统    } 106
汉 字 编 辑 排 版 系 统

汉 字 编 辑 排 版 系 统
汉 字 编 辑 排 版 系 统    } 108
汉 字 编 辑 排 版 系 统

## FIG. 19.

CURRENT SECTION

A
C
B

## FIG. 20.

CURRENT SECTION (8 LINES)

## FIG. 21.

C B
D A
CURRENT SECTION

# FIG. 22.

CONNECTED TO A GENERAL PURPOSE COMPUTER

LOCAL MEMORY

THE DEVICE TRANSFORMING
COMPRESSED REPRESENTATION INTO
A SECTION OF MARKED DOT
MATRIX

| ALTERNATIVE STORING A SECTION MATRIX FOR EACH -TIVE | BUFFERS OF MARKED DOT OF TWO CONSECU- CHARACTERS |
|---|---|

THE DEVICE TRANSFORMING
A SECTION OF MARKED DOT MATRIX
INTO FINAL DOT MATRIX

| ALTERNATIVE STORING TWO SECTIONS OF | BUFFERS CONSECUTIVE PAGE LAYOUT |
|---|---|

CONNECTED TO THE LASER TYPESETTER

7